# EUROPÄISCHE PATENTANMELDUNG

(11) **EP 1 492 047 A2**
(43) Veröffentlichungstag der Anmeldung: **29.12.2004**
(21) Anmeldenummer: 04013409.0
(22) Anmeldetag: 07.06.2004
(51) Int. Cl.: G06K 19/077

(54) **Datenträger**

(30) Priorität: 23.06.2003 DE 10328133
(71) Anmelder: Giesecke & Devrient GmbH, 81677 München (DE)
(72) Erfinder: Rossmadl, Alfred, 87737 Boos (DE)

(57) **Zusammenfassung**

Die Erfindung betrifft einen Datenträger mit einem Körper und einem in einer Vertiefung des Körpers eingefügten elektronischen Modul, der weiter ein Plombierungselement aufweist, das derart an dem Datenträger angebracht ist, dass beim Entfernen des Moduls sichtbare Spuren, insbesondere Beschädigungen, erzeugt werden, wobei durch das Plombierungselement die Funktionsfähigkeit der Kontaktflächen zum Kontaktieren des elektronischen Schaltkreises nicht beeinträchtigt ist.

## Beschreibung

Die Erfindung betrifft einen Datenträger mit einem Körper und einem darin implantierten elektronischen Modul mit einem elektronischen Schaltkreis.

Datenträger, insbesondere Chipkarten, mit integriertem elektronischem Schaltkreis werden beispielsweise als Identifikations-, Kredit-, Wert- oder Buchungskarten oder dergleichen eingesetzt. Eine Möglichkeit zur Herstellung eines solchen Datenträgers besteht darin, ein Modul oder Trägerelement, in das der integrierte elektronische Schaltkreis integriert ist, und einen Körper, insbesondere Kartenkörper, herzustellen, und anschließend das Modul oder Trägerelement in eine entsprechend angepaßte Aussparung des (Karten-) Körpers zu implantieren. An seiner Oberfläche weist das Modul bzw. Trägerelement Kontaktflächen auf, die eine kontaktbehaftete elektronische Kontaktierung des elektronischen Schaltkreises ermöglichen. Der elektronische Schaltkreis kann eine reine Speicherschaltung oder eine reine Logikschaltung oder eine Mikroprozessor-Schaltung oder eine Kombination solcher Schaltungen sein. Zusätzlich kann der Datenträger Schnittstellenschaltungen zur Kommunikation mit den Kontaktflächen aufweisen. Insbesondere kann der Datenträger als Mikroprozessorkarte gestaltet sein, mit einem Mikroprozessor und ein oder mehreren Speicherschaltungen, z.B. RAM, EEPROM, ROM, die auf einem oder mehreren Chips implementiert sein können.

Datenträger werden üblicherweise in Massenfertigung hergestellt. Dazu werden zunächst in einem Fertigungsschritt, der üblicherweise eine Vielzahl von Einzelschritten aufweist, Rohdatenträger gefertigt, die äußerlich identisch sind und sich nicht voneinander unterscheiden lassen. In einem nachfolgenden Personalisierungsschritt werden die einzelnen Datenträger personalisiert. Dazu wird der Datenträger personalisiert, d.h. Datenträger gegenüber anderen Datenträgern unterscheidbar gemacht. Der Begriff Personalisierung ist im weiteren Sinne zu verstehen. Personalisierung im weiteren Sinne bedeutet dabei, dass der entsprechende Datenträger mit Elementen oder Merkmalen versehen wird, die für eine einzelne Person oder für den Datenträger individuell sind. Die Elemente oder Merkmale können, müssen aber nicht, personenspezifisch sein. Bei Datenträgern mit einem elektrischen Speicherelement, wie z. B. Chipkarten, unterscheidet man bei der Personalisierung zwischen optischer und elektrischer Personalisierung. Unter elektrischer Personalisierung wird verstanden, dass personenspezifische oder kartenspezifische Daten in den Chip der Chipkarte geschrieben werden. Unter optischer Personalisierung wird das Versehen des Datenträgers mit optisch detektierbaren Elementen oder Merkmalen verstanden.

Versuche, Datenträger zu fälschen oder nachzuahmen, werden typischerweise unternommen, um einer anderen Person als der berechtigten Person Nutzungsrechte oder Zutrittsrechte zu ermöglichen, die nur der berechtigten Person zustehen.

Hierzu wird beispielsweise versucht, die elektrischen und/ oder optischen Personalisierungselemente oder -merkmale des Datenträgers zu verändern oder nachzuahmen. Beispielsweise werden die im elektronischen Schaltkreis enthaltenen Daten in einen falschen Datenträger kopiert, um die Funktionalitäten des echten Datenträgers nutzen zu können, oder die Daten in dem Schaltkreis werden verändert. Alternativ oder zusätzlich wird das optische (visuelle) Erscheinungsbild des Datenträgers nachgeahmt oder manipuliert, indem z.B. Beschriftungen geändert werden.

Um den Datenträger fälschungssicher zu machen, d.h. gegen unbefugtes Kopieren oder Manipulieren sicher zu machen, sind unterschiedliche Vorgehensweisen bekannt.

Eine Vorgehensweise besteht darin, den elektronischen Schaltkreis gegen Angriffe, die darauf abzielen, die Daten und/oder Programme, die in dem elektronischen Schaltkreis abgespeichert sind, zu verändern oder auszulesen und zu kopieren, beispielsweise auf einen nachgemachten Datenträger elektronisch zu sichern. Hierzu wird beispielsweise das Schaltungslayout des elektronischen Schaltkreises geschickt gestaltet. Alternativ werden die Daten und/ oder Programme mit Software-Maßnahmen geschützt, beispielsweise durch Verschlüsselungstechniken.

Eine andere Vorgehensweise besteht darin, den Körper des Datenträgers fälschungssicher zu gestalten. Dies kann beispielsweise durch geeignete Personalisierungsmaßnahmen wie Aufdrucke und dergleichen erzielt werden, so dass der Körper nur äußerst schwer nachzuahmen ist.

Die beiden Vorgehensweisen bieten allerdings keinen Schutz gegen einen Angriff, bei dem bei einem Datenträger das Modul aus dem Körper ausgebaut wird und in einen anderen Kartenkörper eingesetzt wird. Dies stellt eine Sicherheitslücke dar.

Die Aufgabe der Erfindung besteht ausgehend hiervon darin, einen fälschungssicheren Datenträger zu schaffen, der einen Schutz gegen Austauschen des Moduls gewährt.

Die Aufgabe wird durch einen Datenträger nach dem unabhängigen Anspruch gelöst.

Vorteilhafte Ausgestaltungen sind in den Unteransprüchen angegeben.

Durch das Plombierungselement wird bei dem Datenträger gemäß der Erfindung erreicht, dass das Modul nicht unbemerkt ausgetauscht werden kann. Dies wird dadurch erzielt, dass das Plombierungselement in geeigneter Weise sowohl an dem Modul als auch an dem Körper befestigt ist, so dass das Modul mit dem Körper verplombt ist. Jedes Entfernen des Moduls aus dem Kartenkörper führt somit zu sichtbaren Spuren von Beschädigung, selbst wenn anschließend dasselbe oder ein anderes Modul wieder in den Körper eingesetzt wird. Die Beschädigung kann am Plombierungselement, am Körper des Datenträgers, am Modul oder an mehreren der drei genannten Elemente auftreten.

Das Plombierungselement ist weiter derart angeordnet, dass die Funktionsfähigkeit der Kontaktflächen zum Kontaktieren des elektronischen Schaltkreises aufrecht erhalten ist. Hierdurch ist sichergestellt, dass der Datenträger über seinen gesamten Nutzungszeitraum hinweg gegen ein Austauschen des Moduls gesichert ist und zugleich einsatzbereit ist, so dass der Datenträger dauerhaft gegen ein Austauschen des Moduls gesichert ist und nicht etwa beispielsweise nur solange gesichert ist, wie der Datenträger auf Vorrat gehalten wird und nicht in Gebrauch ist.

Damit ist gemäß der Erfindung ein fälschungssicherer Datenträger geschaffen, der einen Schutz gegen Austauschen des Moduls gewährt.

Gemäß einer Ausführungsform der Erfindung verbleibt zwischen dem Körper und dem Modul ein Spalt, der vorzugsweise mit einem Klebstoff oder einer Gussmasse oder einem anderen Füllmaterial verfüllt ist. Vorzugsweise ist dieser Spalt durch das Plombierungselement zumindest teilweise überbrückt. Dies kann dadurch bewirkt sein, dass das Plombierungselement sich über den Spalt hinweg erstreckt. Alternativ oder zusätzlich kann das Plombierungselement zumindest teilweise in dem Spalt angeordnet sein. Gemäß einer ersten Ausführungsform weist das Plombierungselement eine Streifen auf, der reißt und ausfranst oder dergleichen, wenn das Modul entfernt wird, gemäß einer zweiten Ausführungsform eine Klebstoff-Anordnung, die beim Herausbrechen des Moduls sichtbare Schädigungen bewirkt, optional sowohl einen Streifen als auch einen Klebstoff.

Ausführungsformen der Erfindung sind in der folgenden Beschreibung unter Bezugnahme auf die Zeichnung ausgeführt, in der zeigen:
- Fig. 1: einen Datenträger gemäß einer ersten Ausführungsform der Erfindung, in Aufsicht auf die obere Oberfläche (Vorderseite) des Datenträgers;
- Fig. 2: den Datenträger aus Fig. 1, in Aufsicht auf die untere Oberfläche (Rückseite) des Datenträgers;
- Fig. 3: einen Datenträger gemäß einer zweiten Ausführungsform der Erfindung, in Aufsicht auf die obere Oberfläche (Vorderseite) des Datenträgers;
- Fig. 4: den Datenträger aus Fig. 3, in Aufsicht auf die untere Oberfläche (Rückseite) des Datenträgers;
- Fig. 5: Datenträger gemäß weiteren Ausführungsformen der Erfindung.

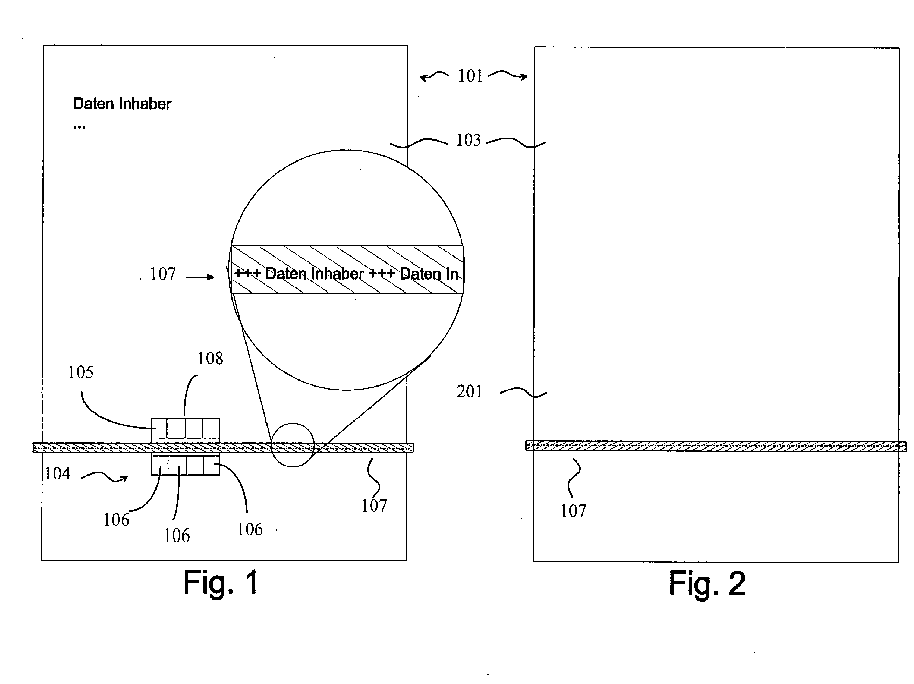

Fig. 1 zeigt einen Datenträger 101 gemäß einer ersten Ausführungsform der Erfindung, in Aufsicht auf die obere Oberfläche 102 (Vorderseite) des Datenträgers 101. Der Datenträger 101 ist als Chipkarte (Smart Card) gestaltet und weist einen Körper 103 und ein in den Körper 103 eingefügtes Chipmodul 104 auf. Auf der oberen Oberfläche 105 des Chipmoduls 104 sind mehrere Kontaktflächen 106 angeordnet, mit denen sich der in das Chipmodul 104 implementierte Chip kontaktieren lässt. Auf der oberen Oberfläche 102 des Datenträgers 101, und dabei insbesondere über die obere Oberfläche 105 des Chipmoduls 104 hinweg, ist ein Sicherheitsstreifen 107 als Plombierungselement aufgebracht. Wird das Chipmodul 104 aus dem Datenträger 101 entfernt, so wird hierdurch der Sicherheitsstreifen 107 beschädigt, beispielsweise ausgefranst. Der Sicherheitsstreifen 107 verläuft derart über die obere Oberfläche 105 des Chipmoduls 104 hinweg, dass die Kontaktflächen 106 derart einzeln kontaktierbar bleiben, wie sie es ohne den Sicherheitsstreifen 107 sind. Der Sicherheitsstreifen 107 verursacht also insbesondere auch dann, wenn er aus Metall gefertigt ist, keine Kurzschlüsse zwischen Kontaktflächen 107.

Der Sicherheitsstreifen 107 kann als Metallstreifen oder Kunststoffstreifen oder als Compoundstreifen aus mehreren unterschiedlichen Materialien (z.B. Metall(e) und/ oder Kunststoff(e)) gestaltet sein.

Fig. 2 zeigt den Datenträger 101 aus Fig. 1, in Aufsicht auf die untere Oberfläche 201 (Rückseite) des Datenträgers 101. Der Sicherheitsstreifen 107 erstreckt sich auch über die untere Oberfläche 201 des Datenträgers 101. Das Chipmodul 104 ist aus dieser Perspektive nicht sichtbar.

Der Sicherheitsstreifen 107 kann aufgeklebt, aufgedampft oder anderweitig geeignet aufgebracht sein, je nachdem, aus welchem Material bzw. welchen Materialien er gefertigt ist. Bei der ersten Ausführungsform gemäß Fig. 1 und Fig. 2 ist der Sicherheitsstreifen 107 in Form eines geschlossenen Bandes rund um den Datenträger 101 gelegt.

Zwischen dem Körper 103 und dem Modul 104 ist ein Spalt vorgesehen, der mit einer Gussmasse vergossen ist. Durch den Sicherheitsstreifen 107 ist dieser Spalt überbrückt.

Gemäß Varianten der ersten Ausführungsform ist der Sicherheitsstreifen 107 nur auf der oberen Oberfläche 102 des Datenträgers 101 ausgebildet, insbesondere mit Abstand von den Rändern des Datenträgers 101, oder gewinkelt über eine Kante des Datenträgers 101.

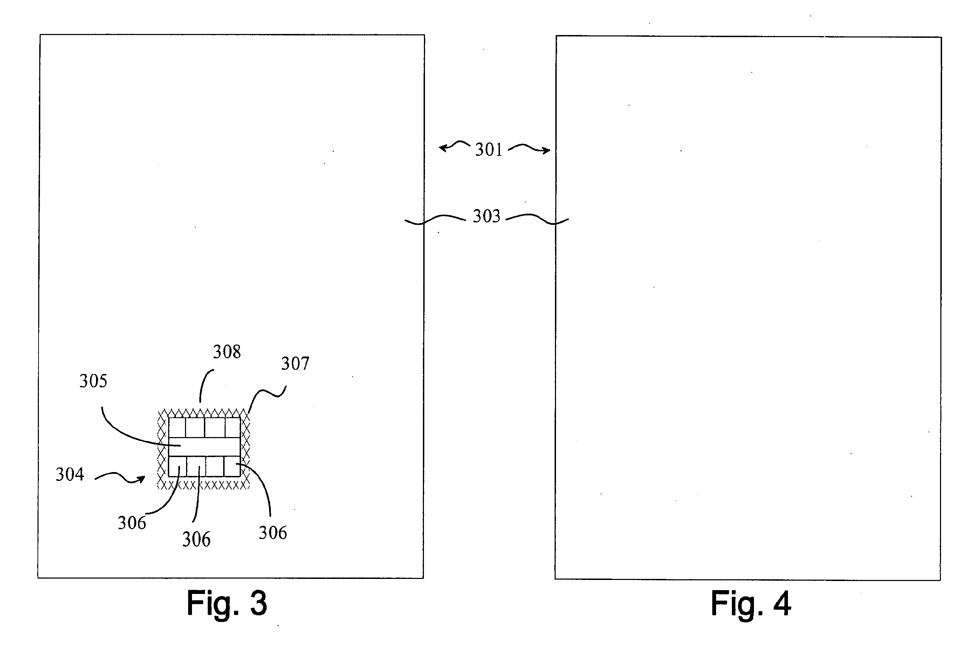

Fig. 3 zeigt einen Datenträger 301 gemäß einer zweiten Ausführungsform der Erfindung, in Aufsicht auf die obere Oberfläche 302 (Vorderseite) des Datenträgers 301. Der Datenträger 301 ist als Chipkarte (Smart Card) gestaltet und weist einen Körper 303 und ein in den Körper 303 eingefügtes Chipmodul 304 auf. Auf der oberen Oberfläche 305 des Chipmoduls 304 sind mehrere Kontaktflächen 306 angeordnet, mit denen sich der in das Chipmodul 304 implementierte Chip kontaktieren lässt. In einem Spalt 308 zwischen dem Körper 303 und dem Chipmodul 304 ist eine Klebstoff-Anordnung 307 als Plombierungselement eingebracht. Der Spalt 308 verläuft vorzugsweise flächig um das gesamte Chipmodul 304 herum und ist weiter vorzugsweise vollständig mit dem Klebstoff 307 ausgefüllt. Wo der Klebstoff 307 eingebracht ist, ist durch den Klebstoff 307 der Spalt überbrückt. Die Klebstoff-Anordnung 307 schließt im wesentlichen bündig mit der oberen Oberfläche 302 des Körpers 303 und der oberen Oberfläche des Chipmoduls 304 ab, wobei die beiden Oberflächen miteinander ebenfalls im wesentlichen bündig sind. Alternativ kann der Klebstoff ein wenig aus dem Spalt überquellen. Wird das Chipmodul 304 aus dem Datenträger 301 entfernt, so reißt der Klebstoff der Klebstoff-Anordnung 307 Teile des Körpers 303 mit sich. Dadurch bleiben, selbst wenn nachfolgend ein echt aussehendes anderes Chipmodul 304 wieder eingesetzt wird, sichtbare Beschädigungsspuren zurück, die den erfolgten Austausch des Chipmoduls 304 offensichtlich machen.

Von der Rückseite des Datenträgers 301 ist die Klebstoff-Anordnung 307 (Plombierungselement) nicht zu sehen, wie in Fig. 4 dargestellt ist.

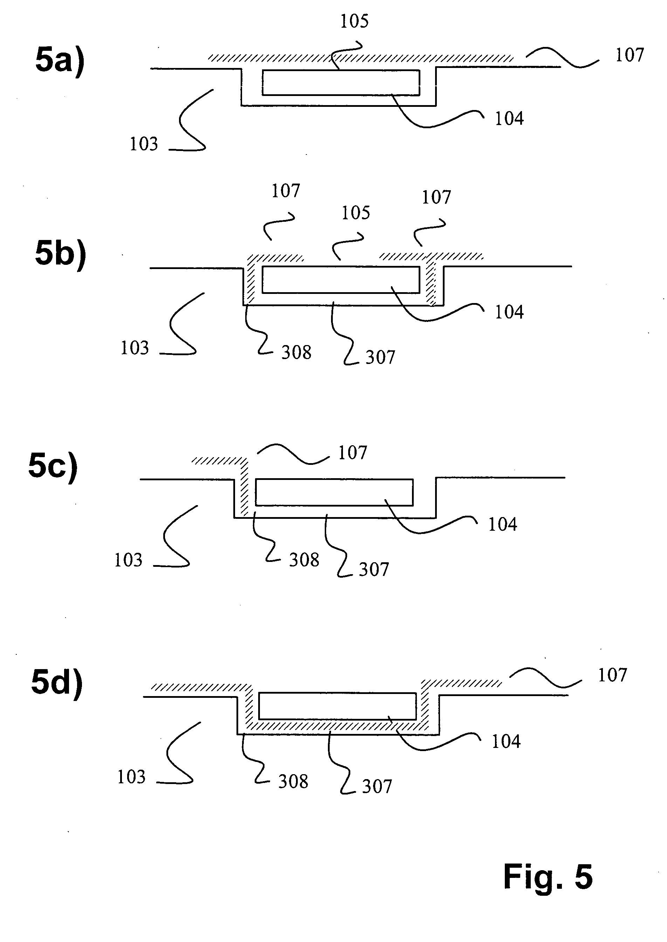

Fig. 5 zeigt Datenträger gemäß weiteren Ausführungsformen der Erfindung.

Fig. 5a zeigt eine Ausführungsform, die der aus Fig. 1 und Fig. 2 ähnlich ist, im Querschnitt. Der Sicherheitsstreifen 107 erstreckt sich bei dieser Ausführungsform über die obere Oberfläche 105 des Chipmoduls 104 hinweg, so wie es in Fig. 1 zu sehen ist, jedoch nur über Teilbereiche der Oberfläche des Körpers 103.

Bei einer dritten Ausführungsform des Datenträgers gemäß der Erfindung, die in Fig. 5b und 5c gezeigt ist, ist als erstes Element des Plombierungselements ein Sicherheitsstreifen 107 vorgesehen, der sich im Spalt 308 und aus dem Spalt 308 heraus gewinkelt auf mindestens eine Oberfläche des Datenträgers 101 erstreckt (Fig. 5b, 5c). Je nach Variante der dritten Ausführungsform erstreckt sich der Sicherheitsstreifen 107 auf die Oberfläche des Körpers 103 oder/ und des Moduls 104. Der Sicherheitsstreifen 107 ist entsprechend in einer Schnittansicht des Datenträgers L-förmig (Fig. 5b, 5c) oder T-förmig (Fig. 5b). Als zweites Element des Plombierungselements ist eine Klebstoff 307 vorgesehen, mit dem der Sicherheitsstreifen 107 in dem Spalt und an der Oberfläche verklebt ist. Wird das Modul 104 entfernt, reißt einerseits der Sicherheitsstreifen 107 ein bzw. franst aus, andererseits wird durch das Herausbrechen des Klebstoffs 307 die Oberfläche des Körpers 103 oder/ und des Moduls 104 beschädigt.

Bei der vierten Ausführungsform der Erfindung, die in Fig. 5d dargestellt ist, weist das Plombierungselement einen Sicherheitsstreifen 107 auf, der sich unter dem Chipmodul hinweg erstreckt. D.h. der Sicherheitsstreifen 107 beginnt auf der oberen Oberfläche des Körpers 103 und erstreckt sich dort bis zum Spalt 308, dort knickt der Sicherheitsstreifen 107 ab und erstreckt sich in den Spalt 308 hinein und dabei bis zum Boden der Vertiefung, in die das Chipmodul 104 eingesetzt ist, am Boden knickt der Sicherheitsstreifen 107 wieder ab und verläuft bis zum gegenüberliegenden Ende des Bodens, dort knickt der Sicherheitsstreifen 107 erneut ab und verläuft im Spalt 308 bis an die Oberfläche des Datenträgers, dort knickt der Sicherheitsstreifen 107 nochmals ab und verläuft weiter auf der Oberfläche des Kartenkörners 103.

Der Datenträger gemäß der vierten Ausführungsform der Erfindung wird vorzugsweise folgendermaßen hergestellt. In einen Kartenkörper 103 wird eine Vertiefung eingefräst. In die Vertiefung wird ein Sicherheitsstreifen 107 oder Metallfaden oder Sicherheitsfaden derart eingelegt, dass er entlang der Seitenwände und des Bodens der Vertiefung anliegt. Danach wird eine Vergussmasse oder ein Klebstoff 307 in die Vertiefung eingefüllt. Anschließend wird ein Chipmodul 104 in die Vertiefung eingesetzt. Je nachdem, wieviel Vergussmasse oder Klebstoff 307 zuvor eingefüllt wurde, quillt dieser über oder nicht. Wahlweise wird überschüssige Vergussmasse bzw. Klebstoff 307 abgewischt oder abgezogen. Sobald die Vergussmasse bzw. der Klebstoff 307 ausgehärtet ist, kann das Chipmodul 104 nicht mehr entfernt werden, ohne dass dabei der Sicherheitsstreifen 107 und/ oder der Kartenkörper 103 beschädigt wird.

Der Sicherheitsstreifen 107 kann weiter Sicherheitsmerkmale aufweisen. Beispielsweise kann der Sicherheitsstreifen 107 eine optische Diffraktionsstruktur aufweisen. Alternativ oder zusätzlich kann der Sicherheitsstreifen 107 ein Hologramm und/ oder eine Beschriftung aufweisen.

Der Datenträger kann beispielsweise als Chipkarte für einen elektronischen Fahrzeugschein verwendet werden. In Fig. 1-4 sind Beispiele für solche Verwendungen dargestellt. Ein solcher Fahrzeugschein weist beispielsweise einen Kartenkörper 103 und ein darin implantiertes und erfindungsgemäß plombiertes Chipmodul 104 auf. Auf den Kartenkörper 103 ist beispielsweise der Name des Fahrzeughalters aufgebracht, wahlweise auch ein Bild des Fahrzeughalters. Im Chipmodul 104 sind die für einen Fahrzeugschein üblichen Daten enthalten. Wird ein Auto gestohlen, so könnte versucht werden, das Chipmodul 104 aus dem Kartenkörper 103 zu entfernen und in einen anderen Kartenkörper 103 einzufügen, der mit Name und ggf. Bild einer anderen Person als des Fahrzeughalters versehen ist. Wird der Austausch des Chipmoduls 103 sorgfältig durchgeführt, so wäre ohne das Plombierungselement 107, 307 der Austausch visuell nicht oder kaum zu erkennen. Weiter besteht häufig nicht die Möglichkeit, den Datenträger gleichzeitig sowohl visuell als auch elektronisch zu überprüfen. Beispielsweise wird bei einer zufälligen Polizeikontrolle der Fahrzeugschein nur visuell kontrolliert. Bei einer Transaktion mit dem Fahrzeugschein über ein Chipkarten-Terminal wird beispielsweise nur eine elektronische Kontrolle durchgeführt, und betreffend den Kartenkörper 103 ist es ausreichend, dass dieser ein Format hat, das sich in das Chipkarten-Terminal einführen lässt. Daher würde eine evtl. bestehende Diskrepanz zwischen visuell detektierbaren Daten auf dem Kartenkörper 103 und elektronisch detektierbaren Daten im (unveränderten echten) Chipmodul 104 unentdeckt bleiben. Durch das Plombierungselement 107, 307 wird hingegen erreicht, dass visuell ohne Weiteres zu erkennen ist, falls das Chipmodul 104 ausgetauscht worden ist, so dass der gefälschte Fahrzeugschein für die Verwendung in der Öffentlichkeit, z.B. bei einer routinemäßigen Polizeikontrolle, unbrauchbar ist.

## Patentansprüche

1. Datenträger (101, 301) mit einem Körper (103, 303) und einem elektronischen Modul (104, 304), das einen elektronischen Schaltkreis und Kontaktflächen (106, 306) zur kontaktbehafteten Kontaktierung des elektronischen Schaltkreises aufweist, wobei
der Datenträger (101, 301) ein Plombierungselement (107, 307) aufweist, das sowohl an dem Modul (104,304) als auch an dem Körper (103,303) derart befestigt ist, dass bei einem Entfernen des Moduls (104, 304) der Datenträger (101, 301), insbesondere das Plombierungselement (107, 307) und/ oder der Körper (103, 303), sichtbar beschädigt wird, wobei das Plombierungselement (107, 307) derart angeordnet ist, dass die Funktionsfähigkeit der Kontaktflächen (107, 307) zum Kontaktieren des elektronischen Schaltkreises aufrecht erhalten ist.

2. Datenträger (101, 301) nach Anspruch 1, wobei zwischen dem Körper (103, 303) und dem Modul (104, 304) ein Spalt (108, 308) verbleibt, und wobei weiter durch das Plombierungselement (107, 307) der Spalt (108, 308) zumindest teilweise überbrückt ist.

3. Datenträger (101, 301) nach Anspruch 2, wobei das Plombierungselement (107, 307) sich zumindest teilweise über den Spalt (108, 308) hinweg erstreckt.

4. Datenträger (101, 301) nach Anspruch 2 oder 3, wobei das Plombierungselement (107, 307) zumindest teilweise in dem Spalt (108, 308) angeordnet ist.

5. Datenträger (101, 301) nach einem der Ansprüche 1 bis 4, wobei das Plombierungselement (107, 307) einen Streifen, insbesondere Sicherheitsstreifen (107), aufweist, der bei einem Entfernen des Moduls (105, 305) insbesondere sichtbar ausgefranst oder ähnlich beschädigt wird.

6. Datenträger (101, 301) nach einem der Ansprüche 1 bis 5, wobei das Plombierungselement (107, 307) einen Spezial-Klebstoff (307) aufweist, der so beschaffen und angeordnet ist, dass bei einem Entfernen des Moduls (105, 305) aus dem Körper (103, 303) der Datenträger (101, 301) sichtbar beschädigt wird.

7. Datenträger (101, 301) nach einem der Ansprüche 1 bis 6, wobei zwischen dem Körper (103, 303) und dem Modul (105,305) ein Spalt (108, 308) verbleibt, der, ggf. in Bereichen, in denen kein Streifen vorgesehen ist, zumindest teilweise mit einem Klebstoff (307) oder einer Gussmasse oder einem anderen Füllmaterial verfüllt ist.

8. Verwendung eines Datenträgers (101, 301) nach einem der Ansprüche 1 bis 7 als elektronischer Fahrzeugschein.
